**Europäisches Patentamt**

**European Patent Office**

**Office européen des brevets**

(19)

(11) Veröffentlichungsnummer: **0 003 580**

**B1**

(12) # EUROPÄISCHE PATENTSCHRIFT

(21) Anmeldenummer: **79100322.1**

(22) Anmeldetag: **03.02.79**

(51) Int. Cl.³: **A 47 K 13/12,**
**A 47 K 11/03, E 05 D 1/04**

(54) **Metallischer Deckelaufsatz für Hygienebehälter.**

(30) Priorität: **03.02.78 DE 7803139 U**

(43) Veröffentlichungstag der Anmeldung:
**22.08.79 Patentblatt 79/17**

(45) Bekanntmachung des Hinweises auf die Patenterteilung:
**11.02.81 Patentblatt 81/6**

(84) Benannte Vertragsstaaten:
**BE FR NL**

(56) Entgegenhaltungen:
**GB - A - 7 280 (AD 1913)**
**NL - A - 292 675**
**US - A - 2 229 508**
**US - A - 4 050 117**

(73) Patentinhaber: **Reinhold Mack GmbH u. Co.**
**Werkzeugbau - Metallwaren**
**Jahnstraße 144**
**D-7320 Göppingen (DE)**

(72) Erfinder: **Mack, Günther**
**Hohensteinstrasse 37**
**D-7320 Göppingen (DE)**
**Der weitere Erfinder hat auf seine Nennung verzichtet**

(74) Vertreter: **Seemann, Norbert W.**
**Brehmstraße 37**
**D-7320 Göppingen (DE)**

Courier Press, Leamington Spa, England.

Metallischer Deckelaufsatz für Hygienebehälter

Die Erfindung bezieht sich auf einen metallischen Deckelaufsatz für Hygienebehälter, beispielsweise Trockenklosetts mit Chemikalienfüllung u.dgl.; dabei ist eine aufschwenkbare Einfüllklappe mit Einfüllrutsche in einer Vertiefung der Oberseite des Deckelaufsatzes gelagert.

Derartige Behälter bestehen im allgemeinen aus einem gegen chemische Einflüsse resistenten Kunststoffgehäuse mit einem Deckelaufsatz aus metallischen, jedoch ebenfalls korrosionsbeständigen Werkstoffen und weisen dabei eine im wesentlichen horizontal verschwenkbare Einfüllklappe auf, die einseitig mit einem Griff, anderseitig mit einer Klappscharnierverbindung o.dgl. versehen ist.

Derartige Scharnierverbindungen erfordern nicht nur eine ganze Reihe kostenaufwendiger Montagearbeiten wie Bohren, Verschrauben usw., und machen Zusatzteile wie Aufsatzscharniere, Schrauben u.dgl. erforderlich, sondern sind sudem auch Schmutzfänger und in verschmutztem Zustand schlecht zu reinigen.

Hier will non die Erfindung, wie sie in den Ansprüchen gekennzeichnet ist, Abhilfe schaffen und löst diese Aufgabe dadurch, daß die Schwenklagerung durch eine Einrollung einer der Kanten der Einfüllklappe, durch eine Ausprägung bzw. Ausstanzung mindestens zweier Lappen aus dem benachbarten Rand des Deckelaufsatzes, sowie scharnierartiges Umbiegen der Lappen um die Einrollung herum, gebildet ist, wobei die Einrollung beidendig mit einem Teilbereich unter dem Rand des Deckelaufsatzes liegt.

Die hierdurch erreichten Vorteile liegen im wesentlichen darin, daß eine Klappen/Deckel-Gelenkverbindung geschaffen werden kann, die einfach herzustellen und sauber zu halten sowie funktionssicher und zugleich aus jeweils ein und demselben Materialzuschnitt herausformbar ist.

Im folgenden wird die Erfindung anhand eines Ausführungsbeispiels in den Zeichnungen näher erläutert. Es zeigt

Figur 1 einen Schnitt durch einen Deckel nach der Erfindung,

Figur 1a einen Teilschnitt nach der Linie AB und

Figur 2 eine Teildraufsicht zu Figur 1.

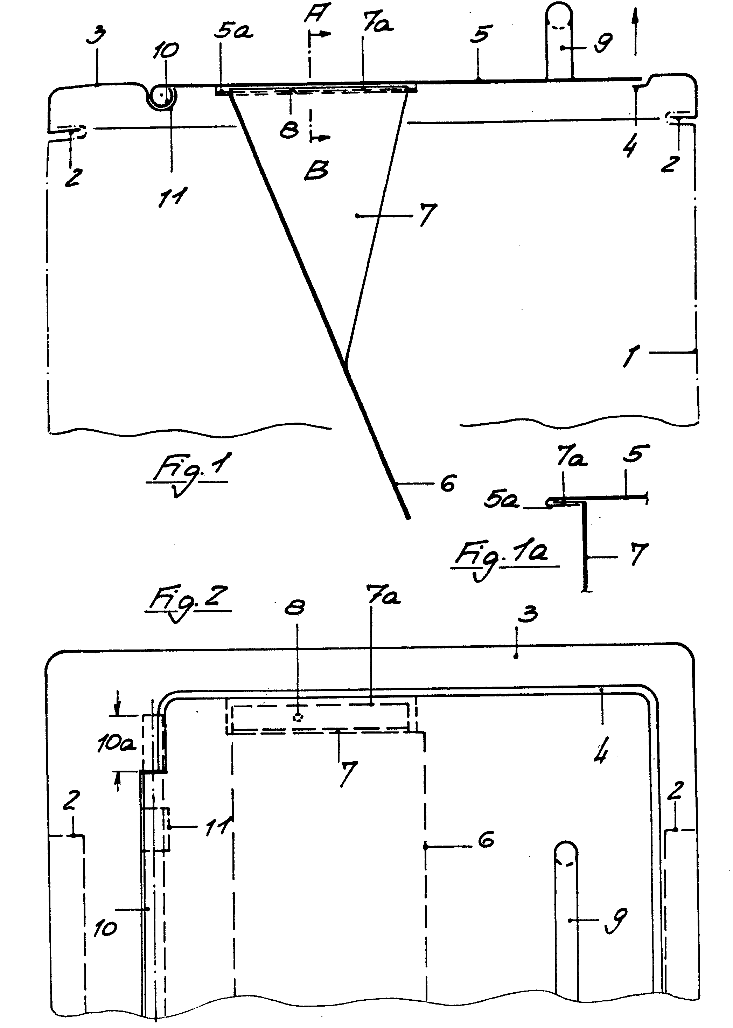

In den Figuren ist auf den strichpunktiert angedeuteten Hygienebehälter 1 über Klemmlaschen 2 ein metallischer Deckelaufsatz 3 aufgesetzt, der eine in einer Vertiefung 4 liegende Einfüllklappe 5 mit Einfüllrutsche 6 aufweist.

Diese Einfüllrutsche 6 besitzt dabei taschenartige Seitenteile 7, die in ihrem Endbereich in die Ebene der Einfüllklappe 5 umgebogene Laschen 7a aufweisen und mit korrespondierenden Abwinkelungen 5a der Einfüllklappe 5 zu einer Einheit verklemmt sind; eine zusätzliche Einprägung bzw. ein Körnerpunkt 8 ergibt den erforderlichen, sicheren Halt bzw. die gegenseitige Endlagenfixierung der Teile 6, 7 und 5.

Neben dem üblichen Griff 9 weist die Einfüllklappe 5 eine Einrollung 10 auf, die eine Art Scharnierhälfte darstellt. Das gesamte Schwenkscharnier der Einfüllklappe 5 wird bei dieser neuerungsgemäßen Ausführung dadurch gebildet, daß die Einrollung 10 beidseits der Vertiefung 4 in einem Teilbereich 10a unter dem Deckelaufsatz 3 geführt und mittels umgebogener Laschen 11 als Gegenlager gehalten wird. Es sind bei dieser Konstruktion also außer dem Blechstanzvorgang nur noch Biege- bzw. Abkantmaßnahmen erforderlich, um zu dem funktionellen Gesamtaufbau zu gelangen.

**Patentansprüche**

1. Metallischer Deckelaufsatz (3) für Hygienebehälter (1), beispielsweise Trockenklosetts mit Chemikalienfüllung u.dgl. wobei in eine Vertiefung (4) der Oberseite des Deckelaufsatzes (3) eine aufschwenkbare Einfüllklappe (5), mit zum Behälterinneren hin gerichteter Einfüllrutsche (6), eingesetzt und gelenkig mit dem Deckelaufsatz (3) verbungen ist, dadurch gekennzeichnet, dä die Schwenklagerung durch eine Einrollung (10) einer der Kanten der Einfüllklappe (5), durch eine Ausprägung bzw. Ausstanzung mindestens zweier Lappen (11) aus dem benachbarten Rand des Deckelaufsatzes (3), sowie scharnierartiges Umbiegen der Lappen (11) um die Einrollung (10) herum, gebildet ist, wobei die Einrollung (10) beidendig mit einem Teilbereich (10a) unter dem Rand des Deckelaufsatzes (3) liegt.

2. Metallischer Deckellaufsatz nach Patentanspruch 1, dadurch gekennzeichnet, daß die Einfüllrutsche (6) mit ihren Seitenteilen (7) über eine Klemmverbindung (5a, 7a) an der Einfüllklappe (5) befestigt und diese Klemmverbindung zusätzlich mit einer Einkörnung (8) o.dgl. als Endlagenfixierung der Blechteile (5, 7) versehen ist.

**Claims**

1. Metallic cover part (3) for hygiene receptacles (1), e.g. chemical closets or similar, whereby a swing-open-type fill flap (5) with fill chute (6) directed towards the receptable interior is inserted into a depression (4) in the top of the cover part (3), the fill flap (5) being connected with the cover part (3) by means of a swivelling joint, characterized in that way that the swivelling bearing application is realized through rolling in (10) of one of the edges of the fill flap (5), through stamping or punching of at least two tabs (11) out of the adjacent edge of the cover part (3), and bending of the tabs (11) like a hinge around the roll-in edge (10), whereby the roll-in edge (10) is located on both sides ·under the edge of the cover part (3) with the partial range (10a).

2. Metallic cover part as per patent claim 1, characterized in that way that the fill chute (6) with its side parts (7) is fastened at the fill flap (5) by means of a clamping joint (5a, 7a), and this clamping joint in addition is provided with a dotting (8) or similar as end position localization of the sheet metal parts (5, 7).

## Revendications

1. Coiffe (3) métallique pour récipients hygiéniques (1) par exemple latrines sèches remplies d'un produit chimique ou similaires, laquelle coiffe (3) est munie, dans une dépression de sa partie supérieure, d'une ouverture de remplissage à couvercle (5) rabattable vers le haut et relié par une jointure articulée à la coiffe (3), ce couvercle étant en outre munie d'un glissoir (6) de remplissage, le tout caractérisé par la formation de cette jointure par enroulement d'un des rebords (10) du couvercle (5) de remplissage, puis par emboutissage resp. estampage d'au moins deux pattes (11) du rebord voisinde la coiffe (3), et par enroulement de ces pattes (11) autour du rebord enroulé (10) formant ainsi une sorte de charniére, tout en laissant une partie (10a) de ce rebord enroulé (10) sous le rebord de la coiffe (3).

2. Coiffe métallique selon la spécification de brevet 1, caractérisée par l'attache du glissoir (6), par l'intermédiaire de ses parois latérales (7), au couvercle (5) de remplissage et ceci à l'aide de joints de serrage (5a, 7a) et d'une fixation en position définitive des pièces en tôle (5, 7) à l'aide d'un coup de pointeau (8) ou similaire.

_Fig. 1_

_Fig. 1a_

_Fig. 2_